# EUROPÄISCHE PATENTSCHRIFT

(11) **EP 2 055 376 B1**
(45) Veröffentlichungstag und Bekanntmachung des Hinweises auf die Patenterteilung: **05.05.2010**
(21) Anmeldenummer: 08167266.9
(22) Anmeldetag: 22.10.2008
(51) Int. Cl.: B01J 19/28, F27B 7/42

(54) **Verfahren zur Erkennung und Bewertung des Gutbetts in Drehrohrreaktoren**
Method for detecting and assessing the firebed in torque tube reactors
Procédé de reconnaissance et d'évaluation du lit de matière dans des réacteurs à tube rotatif

(30) Priorität: 29.10.2007 DE 102007051546
(43) Veröffentlichungstag der Anmeldung: 06.05.2009
(73) Patentinhaber: Ci-Tec GmbH, 76135 Karlsruhe (DE); Karlsruher Institut für Technologie, 76021 Karlsruhe (DE)
(72) Erfinder: Keller, Hubert, 76139 Karlsruhe (DE); Matthes, Jörg, 76137 Karlsruhe (DE); Waibel, Patrick, 71665 Vaihingen an der Enz (DE)
(74) Vertreter: Fitzner, Uwe

(56) Entgegenhaltungen:
- EP-A- 1 441 177
- WO-A-95/32400
- WO-A-2005/038345

## Beschreibung

Die vorliegende Anmeldung nimmt die Priorität der DE 10 2007 051 546.6 in Anspruch. Das Prioritätsdokument ist durch Verweis vollumfänglich in die vorliegende Offenbarung einbezogen (= incorporated by reference in its entirety).

Die vorliegende Erfindung betrifft ein neues Verfahren zur Erkennung und Bewertung des Gutbetts in Drehrohrreaktoren.

Drehrohrreaktoren sind für die verschiedensten technischen Anwendungen bekannt. Es handelt sich grundsätzlich um zylinderförmige Hohlkörper, welche in der Regel während des Verfahrensablaufs um ihre Mittelachse gedreht werden. Solche Reaktoren können für exotherme oder endotherme Verfahrensabläufe Verwendung finden.

Für den Fall des Einsatzes bei Verbrennungsprozessen sind die Innenwände der Drehrohrreaktoren beispielsweise mit feuerfesten Materialien ausgestaltet. Diese Öfen liegen um 3 bis 5° gegen die Waagerechte geneigt und werden durch Zahn- oder Schneckenradantriebe sehr langsam um ihre Achse gedreht. Das an der höher gelegenen Ofenseite eingefüllte Reaktionsmaterial wird damit gut durchmischt und erhält dauernd neue Oberflächen, so dass man mit einer relativ kurzen Brenndauer auskommt.

Solche Drehrohre werden z.B. zum Brennen von Zement oder zur Aufbereitung und Entsorgung von Sonderbrennstoffen eingesetzt. Für eine Überwachung und Optimierung des gesamten Verfahrens ist die Temperaturverteilung auf der Außenseite, im Drehrohrinneren und im Brennbett von Interesse.

Aus Zipser, Matthes u. Keller: Automatisierungstechnik 54 (2006) 11, 574-581 ist der Einsatz von Kameras im visuellen und im infraroten Bereich bekannt. Mittels Infrarotkameras lässt sich unter anderem das Längstemperaturprofil über die Drehrohrlänge, die Fläche, Lage und Form des Brennbetts sowie das Vorhandensein von Temperaturen, die für die Außenmauer kritisch sind, ermitteln.

Ein Infrarotkamera gestütztes Kontrollsystem ist ferner aus Zipser, Gommlich, Matthes, Fouda, Keller: Anwendung des Inspect-System zur kamerabasierten Analyse von Verbrennungsprozessen am Beispiel der thermischen Abfallbehandlung, Forschungzentrum Karlsruhe, Helmholtz-Gemeinschaft, wissenschaftliche Berichte, FZK A 7014, Institut für angewandte Informatik, 2004 bekannt.

Eine Vorrichtung und ein Verfahren zur Optimierung des Abgasausbrands in Verbrennungsanlagen in einer Festbettausbrandzone und einer Abgasausbrandzone ist aus der DE 103 47 340 A1 bekannt. Es wird darauf hingewiesen, dass in der Rostfeuerung anhand der Infrarotstrahlung des Brennstoffbettes mit Hilfe einer Infrarotkamera die volle Lage ermittelt werden kann. Mit Hilfe dieser Informationen erfolgt die Regelung der einzelnen Primärgasströme, die das Festbett durchströmen. Für die Bestimmung eignet sich nach dieser Erfindung insbesondere eine Spektralkamera, welche im Bereich der Brennkammerwandung in die Abgasausbrandzone gerichtet ist und dabei den Wirkbereich vollständig erfasst. Als vorteilhaft wird der Einsatz einer Infrarotkamera für den Wellenlängenbereich zwischen 3 und 12 µm angesehen.

Ein Verfahren zur Erkennung und Identifikation von Brennzonen ist ferner aus der DE 103 02 175 A1 bekannt. Es erfolgt eine kontinuierliche und representative Ermittlung und Identifikation der Brennzonen auf der Grundlage einer bildgebenden Messung und automatischen Auswertung der von Brennbett ausgehenden Infrarotstrahlung. Das Verfahren soll auch bei stark variierenden Brennbetteigenschaften, wie sie durch Brennstoffe mit stark veränderlichen chemisch-physikalischen Eigenschaften und prozessimanenten Störungen, wie Partikelflug und Flammen hervorgerufen werden, eine den physikalisch-technischen Randbedingungen entsprechende und damit representative Erkennung und Identifikation von Brennzonen ermöglichen. Durch eine Bildverarbeitung gelingt eine Minimierung der verfälschenden Wirkung dieser Störungen. Das Verfahren bezieht sich allerdings nicht auf Reaktionen in einem Drehrohrreaktor.

Eine weitere Alternative zur Messung der Temperatur in Rohrreaktoren ist aus der DE 197 17 165 A1 bekannt. Allerdings werden hier nicht Infrarotkameras eingesetzt.

Bei den bisher bekannten thermischen Prozessen mit Messungen durch eine InfrarotKamera werden Bildfilterungsalgorithmen dafür eingesetzt, den störenden Einfluss von Partikeln und rußenden Flammen zu minimieren, die den Blick auf das Brennbett temporär verdecken (DE 103 02 175 A1). Sie beruhen auf dem Prinzip, das eine Serie von Bildern erstellt wird. Durch ein spezielles Bildverarbeitungssystem werden diejenigen Bilder bzw. Bildbereiche (Regionen) ausgeblendet, auf denen Partikel und/oder rußende Flammen vorhanden sind. Im Ergebnis erhält man eine partikel- und flammenbereinigte Abbildung des Brennbetts.

Sämtliche beschriebene Messverfahren mittels Infrarotkamera beziehen sich auf Reaktoren, in denen exotherme Prozesse, insbesondere flächige Verbrennungsprozesse ablaufen. Für endotherme Prozesse ablaufen, sind derartige Verfahren noch nicht bekannt.

Endotherme Prozesse, welche in Drehrohrreakatoren ausgeführt werden können, sind beispielsweise biotechnische Verfahren. Insbesondere Fermentationen und Abfallbehandlung auf biologischem Wege können in solchen Reaktoren durchgeführt werden. Aber auch andere Verfahren, z.B. Zementherstellung, Metallrecycling, Elektroschrott- und Sonderabfallbehandlung sind mittels endothermer Prozessabläufe in Drehrohrreaktoren durchführbar.

Zum Betrieb solcher Drehrohrreaktoren, beispielsweise beim Metallrecycling oder der Zementherstellung ist für eine optimale Fahrweise des Prozesses hinsichtlich Produktqualität, Ausbeute und Energiebedarf die Kenntnis der chemisch-physikalischen Eigenschaften des Gutbetts notwendig. Solche Eigenschaften sind im laufenden Prozess nicht messbar, sondern können bestenfalls durch regelmäßige Probenentnahme durch Laboranalysen ermittelt werden. Die dabei unvermeidliche zeitliche Verzögerung verhindert einen direkten Eingriff in den Prozess im Sinne einer Online-Prozess-Produktoptimierung.

Die chemisch-physikalischen Eigenschaften des Gutbetts äußern sich jedoch in der Temperaturverteilung und in den Konsistenzeigenschaften des Gutbettmaterials (Wälzverhalten, Reibung mit der Drehrohrinnenwand usw.). Solche Informationen könnten damit direkt für eine adäquate Prozessoptimierung verwendet werden. Zur Zeit bestehen jedoch keine Verfahren, um solche Informationen über die Eigenschaften des Gutbetts bei endothermen Prozessabläufen online zu bestimmen.

Aufgabe der vorliegenden Erfindung ist es demgemäß, die Eigenschaften des Gutbetts in Drehrohrreaktoren bei endothermen Prozessabläufen online zu bestimmen und für die Steuerung und Regelung von Verfahren einzusetzen.

Diese Aufgabe wird durch ein Verfahren zur Erkennung und Bewertung des Gutbetts bei endothermen Reaktionsabläufen in Drehrohrreaktoren gelöst, bei welchem unter Einsatz einer Infrarotkamera eine Sequenz von nacheinander aufgenommenen Infrarotbildern erstellt und daraus die Unterschiede in der Temperaturdynamik von Gutbett und von Gasphase ermittelt werden. Zur Gasphase zählen hier auch die darin befindlichen Kleinstpartikel wie beispielsweise Stäube und Ruß.

Endotherme Reaktionen erfordern eine Energiezufuhr von außen und sind im Vergleich zu exothermen Reaktionen träge. Die beiden Phasen im Drehrohrinnenraum weisen folglich im Gegensatz zu exothermen Reaktionen eine ähnliche Temperaturverteilung auf, womit eine exakte Trennung eines Gutbettbereichs und einer Gasphase auf Infrarotaufnahmen praktisch unmöglich wird. Dagegen finden im Gutbett selbst Änderungen in der Temperaturverteilung und in den Konsistenzeigenschaften statt, hervorgerufen von ablaufenden Wälzverhalten, Reibung mit der Drehrohrinnenwand, aber auch durch die endothermen Reaktionen im Gutbett. Auf dem Infrarotbild erscheint die Temperaturverteilung als sich zeitlich veränderndes Muster im Bereich des Gutbetts. Diese zeitlich sich verändernde Temperaturverteilung wird im Anmeldungstext mit dem Begriff "Temperaturdynamik" umschrieben. Der Begriff "Temperaturdynamik" zielt demgemäß im Rahmen der vorliegenden Erfindung immer nur auf zeitliche Veränderungen ab. Das wesentliche ist hier darin zu sehen, dass aus der unterschiedlichen zeitlichen Veränderung der zwei Bereiche Gasphase und Gutbett, die ja a priori nicht erkennbar und unterscheidbar sind, diese eben erst unterscheidbar werden. Erst dadurch werden diese gegeneinander abgegrenzt und somit auswertbar.
Das erfindungsgemäße Verfahren nutzt den Umstand, dass sich bei einer endothermen Reaktion Gutbett und Gasphase auf Infrarotaufnahmen bei gleicher integraler Temperatur nur durch eine unterschiedliche Temperaturdynamik voneinander unterscheiden lassen. Ausgangspunkt ist eine geringere thermische Dynamik des Gutbetts im Vergleich zu der der Gasphase.

Der zeitliche Abstand zwischen den Einzelbildern sollte vorzugsweise kleiner als 1 Sekunde sein, so dass eine für die Messung der Unterschiede in der Temperaturdynamik von Gutbett und Gasphase geeignete Bildsequenz entsteht. Gute Ergebnisse wurden mit 50ms (20 Bilder pro Sekunde) erzielt. Die Auswahl der zeitlichen Abstände hängt jedoch immer von der konkreten Anwendung ab.

Die Sequenz von schnell hintereinander aufgenommenen Infrarotbildern kann in einem speziellen Bildverarbeitungsalgorithmus ausgewertet werden. Mittels des erfindungsgemäßen Verfahrens ist es nunmehr möglich, die Unterschiede in der Temperaturdynamik von Gutbett und Gasphase zu erkennen. In den endothermen Verfahrensabläufen sind nämlich die Schwankungen des Gutbetts bzw. des Festbetts gering, während die thermischen Schwankungen der Gasphase groß sind. Die bisherigen Infrarottemperaturmessverfahren waren daher für endotherme Prozesse nicht geeignet. Denn das Ausblenden der partikelhaltigen Bilder und die alleinige Auswertung der partikelfreien Bildbestandteile ist für die Zwecke der vorliegenden Erfindung nicht wesentlich. Erforderlich ist es vielmehr, eine komplette Bildsequenz auszuwerten, um die angesprochenen Unterschiede in den Temperaturdynamiken zu erkennen. Länge der Sequenz ist Kompromiss zwischen Detektionsgüte und Aktualität des Ergebnisses. Gute Ergebnisse wurden mit Sequenzen zwischen 20 und 100 Bildern erzielt. Nur bei Auswertung der vollständigen Bildsequenz ist es erfindungsgemäß möglich, Werte für die Erkennung des Gutbetts zu erhalten. Da das Gutbett eine geringere thermische Dynamik als die Gasphase besitzt, ergibt sich im Infrarotbild für das Gutbett eine geringere zeitliche Variation als für die Gasphase. Mit dem erfindungsgemäßen Verfahren wird daher ein Variationsbild generiert, das die zeitliche Variation der Temperatur in jedem Bildpunkt für den vorherigen Zeitraum enthält. Dieser vorhergehende Zeitraum umfasst in der Regel wenige Sekunden.

Auf der Basis des Temperaturvariationbilds kann das Gutbett auf Basis des Variationsunterschieds zur Gasphase durch ein Schwellwert-Regionenwachstumsverfahren detektiert werden.

Aufgrund der Infrarotmessung lassen sich auch über die Lage des Gutbetts im Drehreaktor wichtige verfahrenstechnische Informationen erhalten. Diese spiegeln die Materialeigenschaften des Gutbetts wieder, die nach bisherigem Stand der Technik online nicht messbar sind. Zur Beschreibung der Lage des Gutbetts im Drehreaktor dienen der dynamische Schüttwinkel und der Füllwinkel.

Der dynamische Schüttwinkel sowie der Füllwinkel können auf der Basis des detektierten Gutbetts automatisch berechnet werden. Dazu wird durch ein Optimierungsverfahren dasjenige Kreissegment mit zugehörigem dynamischem Schüttwinkel und Füllwinkel gesucht, das die beste Übereinstimmung mit der als Gutbett detektierten Region hat. Alternativ können der dynamische Schüttwinkel und der Füllwinkel auch auf Basis der Positionen der äußeren linken und rechten Punkte der als Gutbett detektierten Region berechnet werden. Eine weitere Alternative ist es, die Grenzpunkte zwischen detektiertem Gutbett und Gasphase für die Bestimmung des dynamischen Schüttwinkels und des Füllwinkels zu benutzen.

In den meisten Drehrohrprozessen ist die bevorzugte Bewegung des Gutbetts das so genannte Rollen. Abhängig von den veränderlichen Materialeigenschaften des Gutbetts sowie von der Rotationsgeschwindigkeit des Drehreaktors kann das Rollen in andere Bewegungsformen wie Kaskaden- oder Kataraktbewegung übergehen. Diese Bewegungsformen sind in den meisten Prozessen nicht erwünscht. Bei diesen Bewegungsprozessen bildet sich das Gutbett nierenförmig aus.

Geeignet für die Beschreibung der Gutbettform ist die Abweichung des Gutbetts zur optimalen Kreissegmentform bei einem Gutbett mit Rollbewegung. Damit können die Differenzflächen zwischen tatsächlich detektiertem Gutbett und optimalen Kreissegment direkt berechnet und als Kenngrößen zur Beschreibung der Form des Gutbetts verwendet werden.

Weitere Informationen über die Eigenschaften des Gutbetts lassen sich aus dem Austragsverhalten des Gutes aus dem Drehrohr ableiten. Dazu wird im Infrarotbild über einen Schwellwert die Region bestimmt, in der die Stirnseite der Drehrohrwand von ausgetragenem Gut verdeckt wird. D. h. durch ein Schwellwertverfahren wird ein Pixel des Infrarotbildes der zu erzeugenden Region zugeordnet, wenn der Pixel-Temperaturwert größer oder gleich einem vorgegebenen Schwellwert ist. Dies ist über einen Temperaturschwellwert möglich, da das ausgetragene Gut deutlich wärmer ist als die Stirnseite der Drehrohrwand. Auf Basis der detektierten Region werden der mittlere Austragswinkel sowie die Austragsbreite berechnet. Alternativ können auch der untere und der obere Austragswinkel berechnet werden.

Findet der Austrag diskontinuierlich statt, so kann für einen vorgegebenen Zeitraum die Zeitdauer ermittelt werden, in der ein Austrag stattgefunden hat. Wird dieser Größe in Bezug zum vorgegebenen Zeitraum gesetzt, wird eine Austragsrate erhalten. Bei kontinuierlichem Austrag ist diese Austragsrate stets 1. Bei diskontinuierlichem Austrag liegt sie im Bereich zwischen 0 und 1.

Auf Basis des detektierten Gutbetts im Infrarotbild können die mittlere Temperatur des Gutbetts, die Temperatur ausgewählter Bereiche des Gutbetts sowie die Temperaturprofile im Gutbett berechnet werden. Für das Gutbett oder ausgewählte Teile des Gutbetts kann zudem die Temperaturstreuung als Maß für die Inhomogenität des Gutbetts berechnet werden.

Die aus den Infrarotbildaufnahmen ermittelten Parameter bzw. Eigenschaften des Gutbetts können im Rahmen der vorliegenden Erfindung als Istwerte für eine nachfolgende Steuerung und/oder Regelung dienen.
Welcher bzw. welche der genannten Parameter jeweils als Istwert dient richtet sich damit nach dem jeweiligen Einzelfall.
Bevorzugt als Istwerte herangezogene Parameter sind im Rahmen der vorliegenden Erfindung die Lage des Gutbetts im Drehrohrreaktor, die Form des Gutbetts, die Austragseigenschaften des Gutbetts, die Temperaturverteilung im Gutbett, Agglomerate, die Größe von Agglomeraten.
Im Rahmen der Regelung und/oder Steuerung können dann beispielsweise die Rotationsgeschwindigkeit des Ofens, die Neigung des Ofens, die Eintragsmenge an Substrat, der Energieeintrag etc. geregelt werden, um die Reaktionsabläufe in gewünschter Weise zu regeln. Bevorzugt wird damit ein gleichmäßiger Reaktionsablauf im Drehrohrreaktor eingestellt.

Durch ungünstige Materialeigenschaften des Gutes kann es zu Agglomerationen (Verklumpungen) im Gutbett kommen. Diese Agglomerationen vermindern meist die Ausbeute und Produktqualität des Prozesses. Sie können bei einigen Prozessen sogar so mächtig werden, dass eine Abschaltung der Anlage notwendig wird. Erfindungsgemäß kann vorzugsweise mit Hilfe eines Algorithmus eine frühzeitige Detektion und Größenabschätzung solcher Agglomerationen erfolgen. Dieser nutzt aus, dass die Agglomerationen gegenüber dem Gutbett und der Gasphase eine sehr kleine mittlere Temperatur besitzen. Damit können sie über einen dynamischen Temperaturschwellwert, der aus der mittleren Gutbetttemperatur bestimmt wird, vom Gutbett und der Gasphase unterschieden werden. Darauf aufbauend kann die Größe der Agglomeration durch die Fläche im Bild abgeschätzt werden. Alternativ kann auch der Radius des die Agglomeration umschließenden kleinsten umhüllenden Kreises als Maß für die Größe benutzt werden.

Im folgenden wird die Erfindung unter Bezugnahme auf die Figuren näher beschrieben:

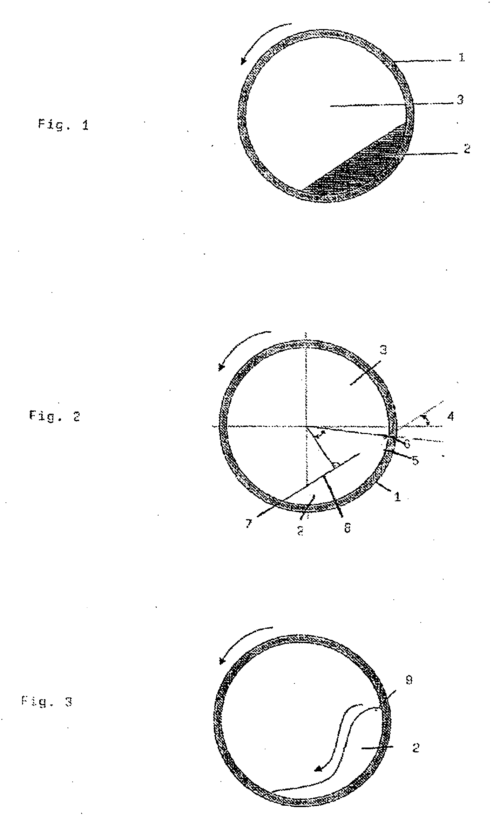

In Figur 1 ist ein Drehreaktor im Querschnitt dargestellt. Dieser umfasst die Drehrohrwand 1 sowie das Gutbett 2 und die Gasphase 3. Der helle Bereich der Gasphase 3 zeigt eine hohe Variation, während der dunkle Bereich des Gutbetts 2 eine geringe Variation anzeigt. Daraus ist ersichtlich, dass der dunkle Bereich des Gutbetts 2 eine geringe thermische Dynamik aufweist. D.h., aufgrund der zeitlichen Variationen der Gasphase 3 und des Gutbetts 2 lassen sich in jedem Bildpunkt für einen vorgegebenen Zeitraum die Unterschiede in der thermischen Dynamik bestimmen.

Figur 2 zeigt ein Beispiel für Ermittlung der Lage des Gutbetts im Drehrohrreaktor durch Bestimmen des dynamischen Schüttwinkels 4 und des Füllwinkels 5. Auf Basis des detektierten Gutbetts 2 lassen sich der dynamische Schüttwinkel 4 und der Füllwinkel 5 automatisch berechnen. Durch ein Optimierungsverfahren kann dasjenige Kreissegment mit zugehörigem Schüttwinkel 4 und Füllwinkel 5 gesucht werden, das die beste Übereinstimmung mit der als Gutbett detektierten Region hat. Alternativ können der dynamische Schüttwinkel 4 und der Füllwinkel 5 auch auf Basis der Positionen der äußeren rechten und linken Punkte 6 und 7 des Gutbetts der als Gutbett 2 detektierten Region berechnet werden. Eine weitere Alternative ist es, die Grenzpunkte 8 zwischen detektiertem Gutbett 2 und Gasphase 3 zur Bestimmung des dynamischen Schüttwinkels 4 und des Füllwinkels 5 zu benutzen.

Figur 3 zeigt ein Beispiel für die Bewertung der Form des Gutbetts. Abhängig von den Materialeigenschaften des Gutbetts und von der Rotationsgeschwindigkeit des Drehrohrreaktors kann das Rollen in andere Bewegungsformen wie Kaskaden- 9 oder Kataraktbewegung 10 übergehen.

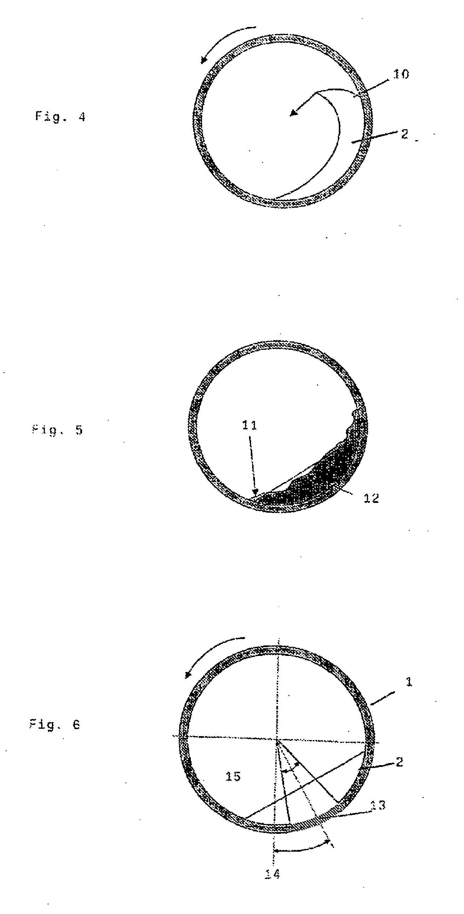

Zur Beschreibung der Form des Gutbetts 2 ist die Abweichung des Gutbetts zur optimalen Kreissegmentform bei einem Gutbett mit Rollbewegung gemäß Figur 5 geeignet. Damit können die Differenzflächen 11 und 12 zwischen tatsächlich detektiertem Gutbett 2 und optimalen Kreissegment direkt berechnet und als Kenngrößen zur Beschreibung der Form des Gutbetts verwendet werden.

Figur 6 zeigt ein Beispiel einer Bewertung der Austragseigenschaften. Dazu wird im IR-Bild über einen Schwellwert diejenige Region bestimmt, in der die Stirnseite 13 von dem ausgetragenen Gut verdeckt wird. Dies ist über einen Temperaturschwellwert möglich, da das ausgetragene Gut 2 deutlich wärmer ist als die Stirnseite 13 der Reaktorwand 1.

Auf Basis der detektierten Region werden der mittlere Austragswinkel 14 sowie die Austragsbreite 15 berechnet.

Alternativ können auch der untere und obere Austragswinkel bestimmt werden (nicht dargestellt).

Findet der Austrag diskontinuierlich statt, kann für einen vorgegebenen Zeitraum die Zeitdauer ermittelt werden, in der ein Austrag stattgefunden hat. Wird diese Größe in Bezug vom vorgegebenen Zeitraum gesetzt, wird eine Austragsrate erhalten. Bei kontinuierlichem Austrag ist diese Austragsrate 1, bei diskontinuierlichem Austrag zwischen 0 und 1.

## Patentansprüche

1. Verfahren zur Erkennung und Bewertung des Gutbetts bei kontinuierlichen Reaktionsabläufen in Drehrohrreaktoren bei welchem unter Einsatz einer Infrarotkamera eine Sequenz von nacheinander aufgenommenen Infrarotbildern erstellt und daraus die Unterschiede der Temperaturdynamik von Gutbett (2) und Gasphase (1) ermittelt werden, wobei es sich bei den Reaktionsabläufen um endotherme Reaktionen handelt.

2. Verfahren nach Anspruch 1, **dadurch gekennzeichnet, dass** mittels der Infrarotkamera die Lage des Gutbetts im Drehrohrreaktor bestimmt wird.

3. Verfahren nach Anspruch 1, **dadurch gekennzeichnet, dass** mittels der Infrarotkamera die Form des Gutbetts bestimmt wird.

4. Verfahren nach Anspruch 1, **dadurch gekennzeichnet, dass** mittels der Infrarotkamera die Austragseigenschaften des Gutbetts bestimmt werden.

5. Verfahren nach Anspruch 1, **dadurch gekennzeichnet, dass** mittels der Infrarotkamera die Temperaturverteilung im Gutbett bestimmt wird.

6. Verfahren nach Anspruch 1, **dadurch gekennzeichnet, dass** mittels der Infrarotkamera Agglomerate detektiert werden.

7. Verfahren nach Anspruch 1, **dadurch gekennzeichnet, dass** mittels der Infrarotkamera die Größe von Agglomeraten ermittelt wird.

8. Verfahren nach Anspruch 1, **dadurch gekennzeichnet, dass** die aus den Infrarotbildaufnahmen ermittelten Parameter als Istwerte für eine nachfolgende Steuerung oder Regelung dienen.

9. Verwendung einer Infrarotkamera zur Aufnahme einer Bildsequenz zwecks Ermittlung der Unterschiede der Temperaturdynamik von Gutbett (2) und Gasphase (1) in einem Verfahren zur Erkennung und Bewertung des Gutbetts bei kontinuierlichen Reaktionsabläufen in Drehrohrreaktoren, wobei es sich bei den Reaktionsabläufen um endotherme Reaktionen handelt.

## Claims

1. Method of recognizing and evaluating the bed of material in continuous reaction processes in rotary tube reactors, in which a sequence of infrared images taken in succession is produced using an infrared camera and the differences in the temperature dynamics of bed of material (2) and gas phase (1) are determined therefrom, where the reaction processes are endothermic reactions.

2. Method according to Claim 1, **characterized in that** the position of the bed of material in the rotary tube reactor is determined by means of the infrared camera.

3. Method according to Claim 1, **characterized in that** the shape of the bed of material is determined by means of the infrared camera.

4. Method according to Claim 1, **characterized in that** the discharge properties of the bed of material are determined by means of the infrared camera.

5. Method according to Claim 1, **characterized in that** the temperature distribution in the bed of material is determined by means of the infrared camera.

6. Method according to Claim 1, **characterized in that** agglomerates are detected by means of the infrared camera.

7. Method according to Claim 1, **characterized in that** the size of agglomerates is determined by means of the infrared camera.

8. Method according to Claim 1, **characterized in that** the parameters determined from the infrared images serve as actual values for subsequent control or regulation.

9. Use of an infrared camera for recording a sequence of images fo r th e purpose of determining the differences in the temperature dynamics of bed of material (2) and gas phase (1) in a method of recognizing and evaluating the bed of material in continuous reaction processes in rotary tube reactors, where the reaction processes are endothermic reactions.

## Revendications

1. Procédé pour la détection et l'évaluation du lit de matière lors de déroulements de réactions continues dans des réacteurs tubulaires rotatifs, dans lequel on réalise, en utilisant une caméra infrarouge, une séquence de clichés infrarouges pris consécutivement et on détermine à partir de celle-ci les différences de la dynamique de température entre le lit de matière (2) et la phase gazeuse (1), où il s'agit, pour les déroulements des réactions, de réactions endothermiques.

2. Procédé selon la revendication 1, **caractérisé en ce que** la position du lit de matière dans le réacteur tubulaire rotatif est déterminée au moyen de la caméra infrarouge.

3. Procédé selon la revendication 1, **caractérisé en ce que** la forme du lit de matière est déterminée au moyen de la caméra infrarouge.

4. Procédé selon la revendication 1, **caractérisé en ce que** les propriétés d'évacuation du lit de matière sont déterminées au moyen de la caméra infrarouge.

5. Procédé selon la revendication 1, **caractérisé en ce que** la répartition de la température dans le lit de matière est déterminée au moyen de la caméra infrarouge.

6. Procédé selon la revendication 1, **caractérisé en ce que** des agglomérats sont détectés au moyen de la caméra infrarouge.

7. Procédé selon la revendication 1, **caractérisé en ce que** la taille des agglomérats est déterminée au moyen de la caméra infrarouge.

8. Procédé selon la revendication 1, **caractérisé en ce que** les paramètres déterminés à partir des clichés infrarouges servent de valeurs instantanées pour une commande ou une régulation en aval.

9. Utilisation d'une caméra infrarouge pour l'enregistrement d'une séquence d'images en vue de la détermination des différences de la dynamique de température entre le lit de matière (2) et la phase gazeuse (1), dans un procédé pour la détermination et l'évaluation du lit de matière lors de déroulements de réactions continues dans des réacteurs tubulaires rotatifs, où il s'agit, pour les déroulements des réactions, de réactions endothermiques.
